# EUROPEAN PATENT SPECIFICATION

(11) **EP 4 415 516 B1**
(45) Date of publication and mention of the grant of the patent: **18.11.2026**
(21) Application number: 22786481.6
(22) Date of filing: 23.09.2022
(51) Int. Cl.: A01C 7/20, A01C 7/08

(54) **SEED ACCELERATOR**
SAATGUTBESCHLEUNIGER
ACCÉLÉRATEUR DE GRAINES

(30) Priority: 11.10.2021 US 202163262360 P
(43) Date of publication of application: 21.08.2024
(73) Proprietor: Precision Planting LLC, Tremont, IL 61568 (US)
(72) Inventor: HODEL, Jeremy, TREMONT, Illinois 61568 (US)
(74) Representative: AGCO Intellectual Property Department
(86) International application number: PCT/IB2022/059040
(87) International publication number: WO 2023/062463

(56) References cited:
- DE-A1- 102010 016 389
- US-A1- 2002 100 400
- US-A1- 2020 367 425

## Description

### BACKGROUND

There are several methods of orienting seeds for planting. Examples of orientation systems include PCT Publication Nos. WO2018013858A1, WO2018013859A1, WO2018013860A2, and WO2018013861A1. One particular seed orienter is described in U.S. Patent Publication No. US2020/0367425A1, which discloses a seed orientation coil 40 Seed is acelerated with air into the coil, and the air is dissipated via vents 68. Further relevant prior art is US 2002/100400 A1.

### BRIEF SUMMARY

According to the invention, there is provided a seeding system as defined in claim 1. Further optional features are set out in the claims dependent on claim 1.

### BRIEF DESCRIPTION OF THE DRAWINGS

FIG. 1 illustrates a plan view of a first example of a seed orientation system integrated into a planter row unit.
FIG. 2 is a perspective view of the first example of the seed orientation system.
FIG. 3 is an exploded perspective view of the first example of the seed orientation system.
FIG. 4 is a cross sectional view of the seed collector on the first example of the seed orientation system.
FIG. 5 is an exploded perspective view of the seed orientation coil assembly of the first example of the seed orientation system
FIG. 6A is a cross sectional view of an injector core taking along lines B-B of FIG. 5.
FIG. 6B is a cross sectional view of a vented outer coil taking along lines A-A of FIG. 5.
FIG. 7 is a cross sectional view of seed orientation coil assembly of a first example of the seed orientation system.
FIG. 8 is a rear perspective view of the seed orientation system
FIG. 9 is a detail view of the seed orientation system from FIG. 8.
FIG. 10 is a planar view of a planter row unit with an alternate example of a seed collector.
FIG. 11 is a planar view of the alternate example of a seed collector.
FIG. 12 is a cross sectional view of the vented outer coil illustrating the position of a seed and the representative centrifugal forces on the seed.
FIG. 13 is a cross sectional view of the vented outer coil illustrating the position of seeds and the representative aerodynamic forces.
FIG. 14 is a schematic of a seed acceleration system forming part of a seeding system according to the present invention.
FIG. 15 is a sectional view of the seed meter of the seed acceleration system of FIG. 14.
FIG. 16 is a schematic of another seed acceleration system forming part of a seeding system according to the present invention.

### DETAILED DESCRIPTION

Referring to the drawings, wherein like reference numerals designate identical or corresponding parts throughout the several views.

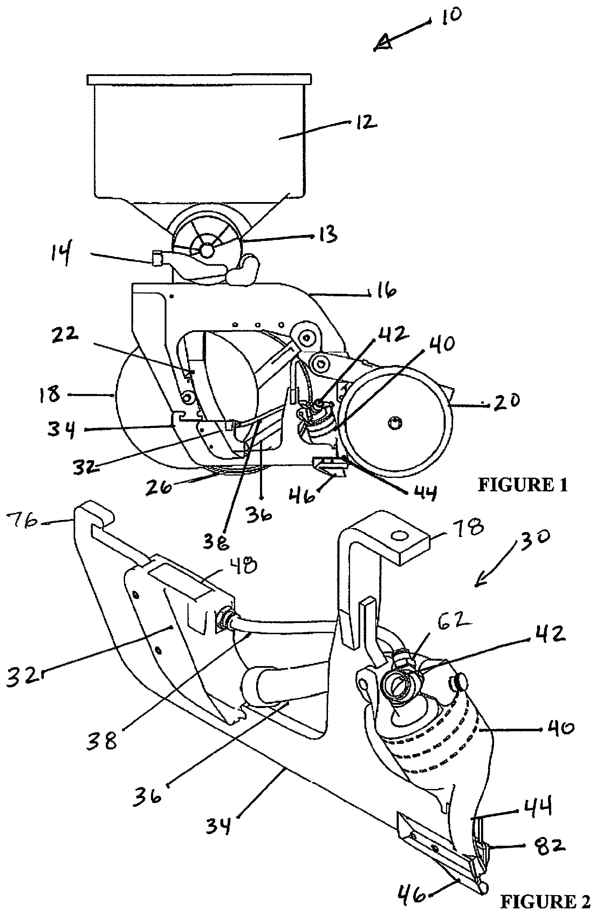

FIG. 1 illustrates a row unit **10** with a seed orientation system **30** installed. Row unit **10** is an example of a commonly found planter unit designed for the purpose of delivering a seed into a furrow. Row unit **10** would typically be found mounted to a tool bar that attaches to a tractor or similar towing device along with other identical or similar planting row units. Row units can be found in even number groups from a few units to as many as forty-eight row units.

The typical row unit **10** includes seed hopper **12** for storing the seed for planting. The seed is directed to a seed meter **13.** The seed meter **13** may use a conventional vacuum disk driven by a vacuum delivery line **14.** The seed meter **13** acts to singulate the seed at a desired spacing for delivery to the ground. From the seed meter **13,** the seed is delivered to the ground through seed tube **22.**

A shank structure **16** provides the structural support for the seed hopper **12,** seed meter **13** and the seed tube **22.** Opener blade **18,** a gauge wheels **26** and a closing wheels **20** are also attached to the shank **16.** The opener blades **18** forms a trench or furrow in the soil ahead of the seed tube **22.** The gauge wheel **26** control the depth of the furrow and the closing wheels **20** close the furrow over the seed.

In a first example, seed orientation system **30** is mounted to the row unit **10.** Seed orientations system **30** includes a seed collector **32** operably attached to the seed tube **22.** The seed collector **32** gathers the seed and changes its direction by way of a seed transfer tube **36** to a seed orientation coil assembly **40.** The seed passes through the helical path of the seed orientation coil assembly **40** to an oriented seed exit path **44.** A sub-furrow opener **46** creates a wedge shaped trough within the furrow for capturing the oriented seed.

Movement of the seed throughout the seed orientation system **30** is aided by air from a central blower/fan. Air is first directed to system air infeed **42** disposed on the upper face of the seed orientation coil assembly **40.** An air line **38 is** then directed to seed collector **32** for moving the seed from the seed collector **32** to the seed orientation coil assembly **40.**

A seed orientation support structure **34** provides the structural support for the seed collector **32,** seed transfer tube **36,** the seed orientation coil assembly **30** and the sub-furrow opener **46.** The seed orientation support structure **34** may be connected to the shank structure **16** at one or more locations. The seed orientation support structure **34** also acts to keep debris out of the furrow and to protect against rock impacts

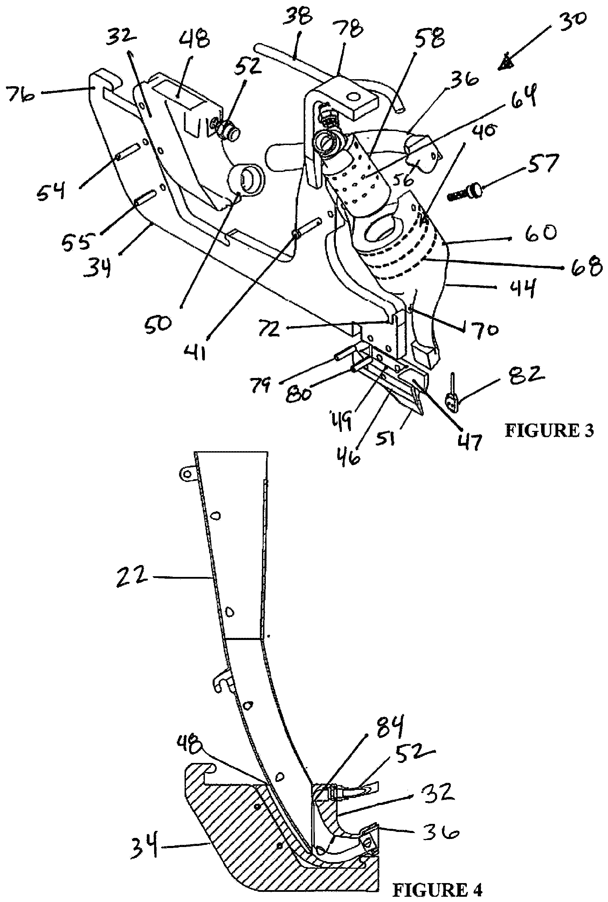

FIGS. 2 and 3 depict the seed orientation system **30.** Seed orientation system **30** includes a seed collector **32** that directs seeds from seed tube **22** to seed orientation coil assembly **40** by way of seed transfer tube **36.** Seed collector **32** includes a seed entrance aperture **48** and a seed exit aperture **50.** Seed entrance aperture **48** is sized to mate with the seed tube **22.** An air line connection **52** is disposed adjacent to the seed entrance aperture. The seed collector **32** may include various indentations or flanges for connection to the seed orientation support structure **34,** as well as pins **54** and **55.**

Seed transfer tube **36** attaches to seed exit aperture **50** at a first end and to seed orientation coil **40** at a second end. It is envisioned that seed transfer tube **36** will include a mating flange **56** and a retaining pin **57** for connection to the seed orientation coil **40.** Pin **41** retains the seed orientation coil assembly **40** relative to the support structure **34.**

Seed orientation coil **40** includes an injector core **58** that resides within vented outer coil **60.** The injector core **58** includes at a first end incoming air feed **42** and outgoing air feed **62** that provides air through air line **38** to air line connection **52** on the seed collector **32.** Injector core **58** further includes a plurality of nozzles **64** arrayed in a helical pattern about the outer face of the injector core **58.**

Vented outer coil **60** defines an aperture injector core **58.** The vented outer coil **60** includes a seed entrance **66** that mates with flange **56** of the seed transfer tube **36.** A plurality of vents **68** are disposed about the outer face of the vented outer coil **60.** The vents **68** may have a variety of shapes including rectangular, circular, ellipsoid or other random shapes. The vents **68** do not have to be uniform in size or shape. At a second end of the vented outer coil **60,** seed exit path **44** extends towards the ground. A seed sensor **82** may be attached to the vented outer coil **60** approximate the exit path **44** so as to monitor seed flow.

Seed orientation support structure **34** connects to the row unit shank 16 through hook **76** and flange mount **78.** It is envisioned that the geometry and location of such connection points can be altered depending on the structure of the row unit **10.** The seed orientation support structure **34** supports the seed orientation coil **40** through flange **70** which extends from the second end of vented outer coil **60.** The flange **70** mates within notch **72** of the seed orientation support structure **34.** The sub-furrow opener **46** is connected to the seed orientations support structure **34** by roll pins **79** and **80.**

FIG. 4 depicts the intersection between the seed tube **22** and seed transfer tube **36.** The seed tube **22** is inserted through seed entrance aperture **48.** Air feed **52** is operably connected to an air blade nozzle **84** which directs air towards the seeds. Air blade nozzle **84** propels the seeds into the seed transfer tube **36.** Seeds exiting the seed tube **22** are in a random orientation with a high rotational energy as they have fallen from the seed meter **13** without any attempt at orientation.

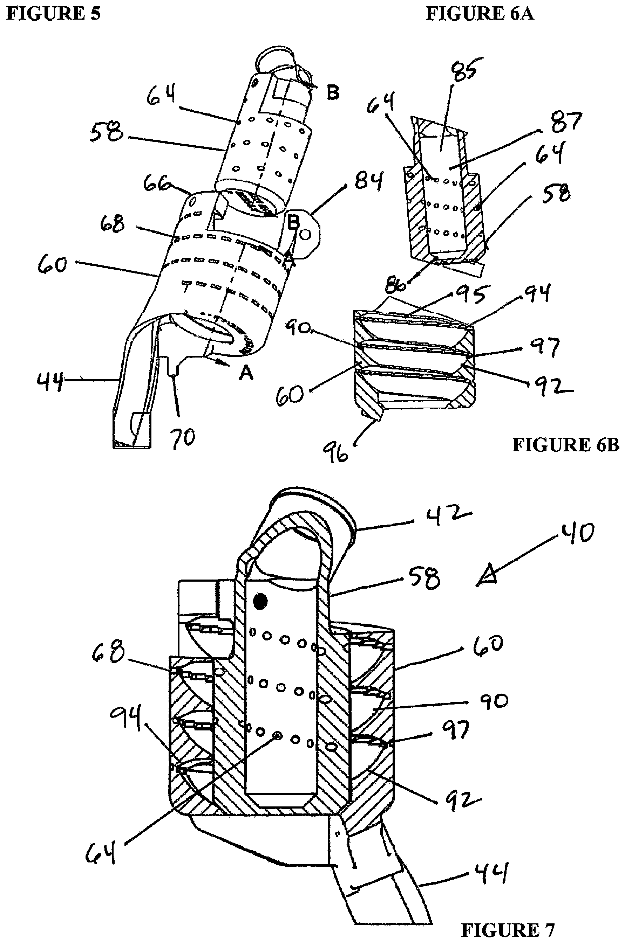

FIGS. 5 through 7 depict a first example of the seed orientation coil assembly **40** in which the random position of the seed is changed to an oriented tip down position. FIG. 6A illustrates an exploded view of the seed orientation coil assembly **40.** FIG. 6A is a cross sectional view of the injector core **58** taken at B-B. FIG. 6B is a cross sectional view of the vented outer coil **60** taken at A-A. Injector core **58** is nested within vented outer coil **60.** The vented outer coil **60** is attached to the seed orientation support structure **34** at flange **70** and mounting point **84.**

The injector core **58** is generally cylindrical in shape with an air aperture **85** at a first end and a closed aft end **86.** A plurality of nozzles **64** are shown in a helical pattern creating air passages between the central aperture **87** of the injector core and the vented outer coil **60.**

The vented outer coil **40** is generally cylindrical in shape with an open central aperture for insertion of the injector core **58.** The exterior wall of the vented outer coil **40** includes a plurality of vents **68** that create air passages. The vented outer coil **40** further includes seed entrance **66** that opens to helical pathway **90.**

FIG. 6B illustrates the helical pathway **90** of the vented outer coil **60.** Helical pathway **90** includes seed riding surface **92** that intersects with seed guide wall **94.** The seed riding surface **92** is curved so as to have a tighter or smaller radius towards the aft end **96** and a wider radius at the seed entrance end **95.** The seed guide wall **94** intersects the seed riding surface **92** at ninety degrees to form a seed riding path **97.** The plurality of vents **68** are generally disposed at the level of the seed riding path **97** on the seed riding surface **92.** In a first embodiment the helical pathway **90** completes three revolutions about the injector core **58.**

FIG. 7 illustrates the cross-sectional view when the injector core **58** is disposed within the vented outer coil **60.** In a first embodiment, the outer wall of the injector coil **58** forms the inner barrier for the helical pathway **90.** As such, the vented outer coil **60** does not require an inner wall or barrier. The helical pathway **90** terminates at the seed exit path **44.** The curvature of the helical pathway **90** is changed as it transitions to the seed exit path **44** so the flat of the corn seed stays firmly positioned against the exit wall. The direction change of the path also separates the somewhat chaotic airflow of the injector nozzles and leaves only a nice laminar flow that helps the seed retain its ordered state of sliding flat on the smooth path surface, tip forward.

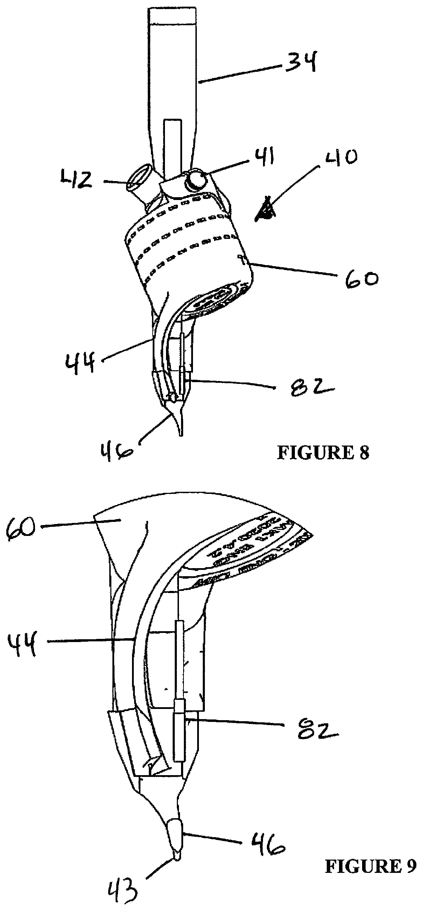

FIGS. 8 and 9 illustrate the seed orientation exit path **44** and sub-furrow opener **46** which are part of the seed orientation coil assembly **40.** The seed orientation exit path **44** is a continuation of the helical pathway **90.** The seed sensor **82** is disposed approximate the seed exit point **45.** The purpose of the seed sensor **82** is to make sure the row unit **10** is actually planting seeds and, if not, will alert the person in the tractor that the row isn't planting because either the seed ran out in hopper or seed is plugged in the seed tube.

As depicted in FIG. 3, the sub furrow opener **46** may define an exit path aperture **47** that holds the exit path **44** and a support structure aperture **49** that allows for mounting the sub-furrow aperture **46** to the seed orientation support structure **34.** The sub-furrow opener **46** also features an extended bottom slot or extension **43** that shapes the sub-furrow to prevent the seed tip from hitting the bottom of the sub-furrow and recoiling out, losing its orientation. The seed sensor **82** is operably connected to the structure of the sub-furrow opener **46.** The exit path is also swept backward to help reduce the horizontal velocity delta of the seed versus the ground that the seed is coming into contact with.

As the seed leaves the exit path **44** it will be airborne for a short distance, maintaining its stable state. The exit path **44** aims the seed at a sub-furrow created by a sub-furrow opener **46.** The sub-furrow opener **46** shapes walls into the soil that come into contact with the flat sides of the seed, wedging the seed into the soil, retaining its orientation.

The sub-furrow opener **46** also has a blade **51** that is swept back. This is to prevent clogs from soil entering up into the seed path when the planter is initially setting down into the soil. This can be achieved because the seed is shot backward at an angle, missing contact with the former blade **51.** This swept back former blade **51** also helps keep the sub-furrow walls from collapsing prematurely in loose soils. Collapsed walls would result in the seed bouncing, losing its orientation.

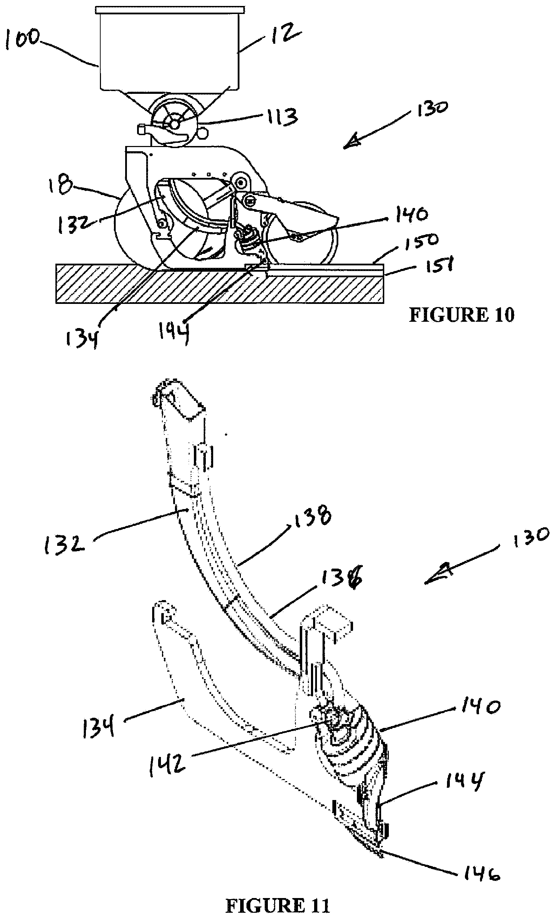

FIGS. 10 and 11 illustrate an alternate seed collector design wherein the existing seed tube is removed and the seed orientation system **130** is directly connected to the seed meter. The seed orientation system **130** is mounted to the row unit **100.** Seed orientations system **130** includes a seed collector **132** operably attached to the seed meter **113.** The seed collector **132** gathers the seed and changes its direction by way of a seed transfer tube **136** to a seed orientation coil assembly **140.** The seed passes through the helical path of the seed orientation coil assembly **140** to an oriented seed exit path **144.** A sub-furrow opener **146** creates a wedge-shaped trough within the furrow for capturing the oriented seed. The opener blade **18** creates a furrow **150** and the sub-furrow opener creates a trough **151 within** the furrow **150.**

Movement of the seed throughout the seed orientation system **130** is aided by air from a central blower/fan. Air is first directed to system air infeed **142** disposed on the upper face of the seed orientation coil assembly **140.** An air line **138** is then directed to seed collector **132** for moving the seed from the seed collector **132** to the seed orientation coil assembly **140.** The seed collector **132** catches seeds directly from the seed meter **113** and gently transports the seed under air power in the most direct and efficient path possible to the seed orientation coil. This configuration improves seed spacing and minimizes seed tumbling. A seed orientation support structure **134** provides the structural support for the seed orientation coil **130** and the sub-furrow opener **142.**

In operation, the seed orientation system **30** delivers seeds from a row unit **10** to the ground in an optimal growing orientation. Seeds are placed in seed hopper **12.** The seed hopper **12** includes an opening to direct the seed to a seed meter **13.** The seed meter **13** then attempts to singulate the seed and spaces the seed out for delivery into the ground. The seed orientation **system 30** either collects the seed from the seed **tube 22 or** from a seed collector **132** that replaces the seed tube **22.**

A high-flow pressurized air system propels the seed from the seed collector **32, 132** through a seed transfer tube **36, 136** to the seed orientation coil assembly **40.** A major factor in seed stability is catching/collecting the seed as gentle as possible from the seed meter. The seed ideally slides gently vs. tumbling into the orientation coil. This may be achieved by a very gentle and gradual collector path **132** from the meter to the coil to reduce acute angle impacts resulting in tumbling. A tumbling seed entering the orientation coil can result in tumbling through the entire coil as the air jets will just add to the disordered energy of the tumbling seed instead of stabilizing it.

The seed enters into a vented outer coil **60** of the seed orientation coil assembly **40,** said vented outer coil **60** defining a helical pathway **90** to a seed exit path **44.** The vented outer coil **60** includes a plurality of air vents **68** disposed radially about an outer wall of the vented outer coil **60.**

Pressurized air is injected into the injector core **58** of the seed orientation coil assembly **40.** The injector core includes a plurality of air inj ectors or nozzles **64** disposed radially about the outer wall of the injector core **58.** The nozzles **64** direct a focused air stream across the helical pathway **90** of the vented outer coil **60.** It is envisioned that the nozzles may be aligned with air vents **68.**

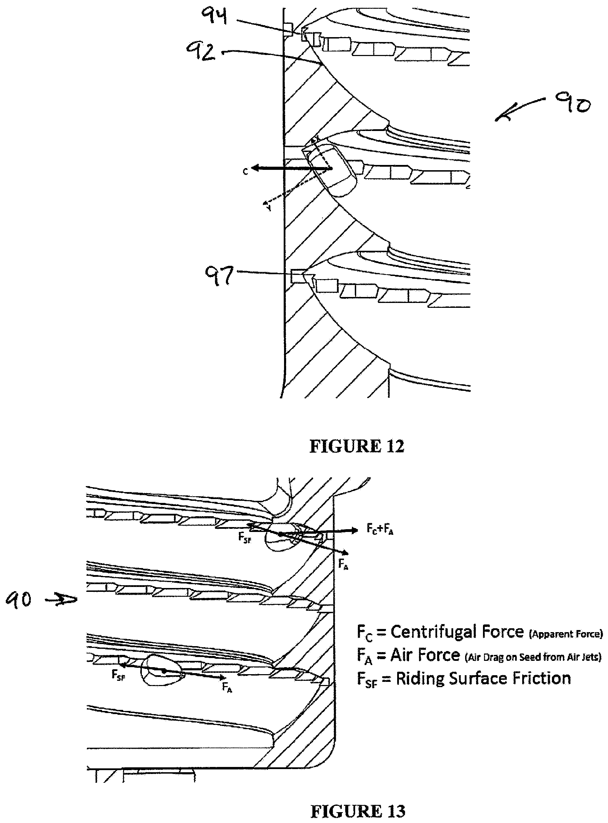

The seed enters the helical pathway **90** is a random position. The airflow through the injector core and the vented outer coil **60** push the seed up the seed riding surface **92** to the seed guide wall **94.** As illustrated in FIGS. 12 and 13, a centrifugal force **F_{c}** (an apparent force) is induced on the seed as it travels its curved/helical pathway **90.** The airflow from the injector nozzles **64** hit the seed at an angle, giving two main (pressure) force vector components on the seed. One component pushes parallel to the seed path and the other pushes perpendicular to the seed path. The parallel component of the airflow flows from behind the seed and over the seed, this both propels the seed forward and causes the seed to orient tip forward in the flow (as this orientation has the lowest stable aerodynamic cross section (lowest drag)). This parallel airflow component also increases the velocity of the seed which makes soil capture possible. The parallel airflow may be a combination of the airflow generated by the seed meter and the air flow directed to the seed transfer tube. The perpendicular component of the airflow, combined with centrifugal force **F_{c}** pushes the seed into the seed riding surface **92** and seed guide wall **94** to provide the stability needed to maintain the tip-forward orientation.

After the seed is oriented it is necessary to stabilize the position of the seed all the way to the ground. It is easy to orient a seed for a few seconds but due to the shape of the seed there is a tendency for the seed to tumble out of control. Keeping the seed stable after orientation requires a combination of techniques. In order to a maintain position of the seed, a low friction surface for the helical path 90 is preferred. Low friction, low roughness and/or lubricious surface reduces any tumbling of the seed as the seed will not "dig in" or "catch" on the surface and instead induce the seed to slide, maintaining an oriented position. An energy absorbing surface is also beneficial for it will "deaden" seed impact energy from tumbling and allow the seed to ride vs. rolling and/or tumbling and help maintain an oriented position. The path from the seed meter **13** to the orientation coil **40** also benefits from the properties listed above for the orientation coil riding surface **90.**

A curved path also acts to maintain the seed orientation through a centrifugal force **F_{c}.** The centrifugal force **F_{c}** acts on the seed, to drive the seed into the surface to stabilize and reduce bouncing, tumbling and to help retain an oriented position. In addition to the curved pathway **90,** a riding surface shape/profile that has a guide wall helps to precisely locate, stabilize, and maintain the orientation of an oriented seed. The curved shape of the riding surface will also help align the seed longitudinally along the seed path which aids in the orientation process.

The seed is then directed to the seed exit path **44** and then into a scored sub-furrow inside a main furrow that is used to capture or wedge the seed to retain its orientation and/or position. The seed orientation can be captured/preserved if the seed is propelled into an interference fit sub-furrow in the soil that the seed wedges into. The sub-furrow profile preferably needs to taper down to allow seeds of all sizes to be captured. The profile should also have an extended bottom to prevent the seed tip from hitting the bottom of the sub-furrow and recoiling out before becoming wedge/taper locked.

The seed orientation coil assembly **40** is angled relative to the normal with the ground to help reduce the seed/ground velocity delta. At a typical 5 mph planting speed and what would be a 5 mph horizontal velocity delta, the angled coil should reduce the velocity delta to about 2 mph. At a slower 3 mph planting speed, the seed would be a dead drop into the sub-furrow.

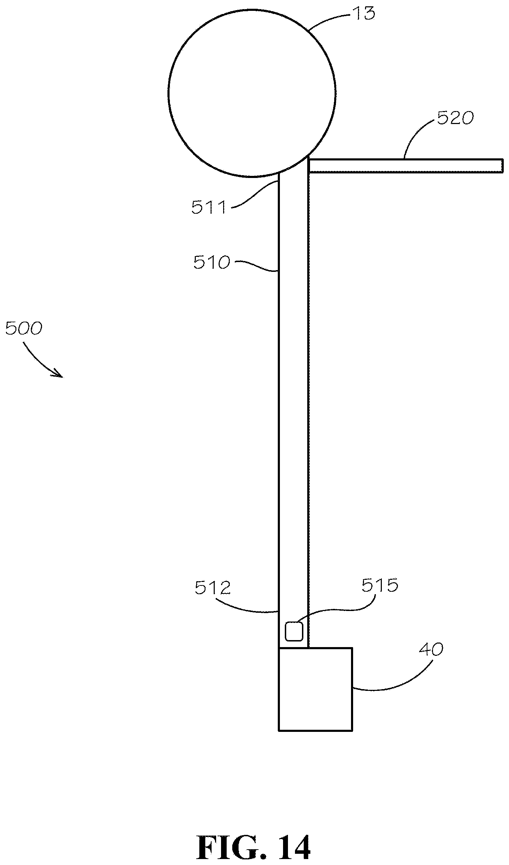

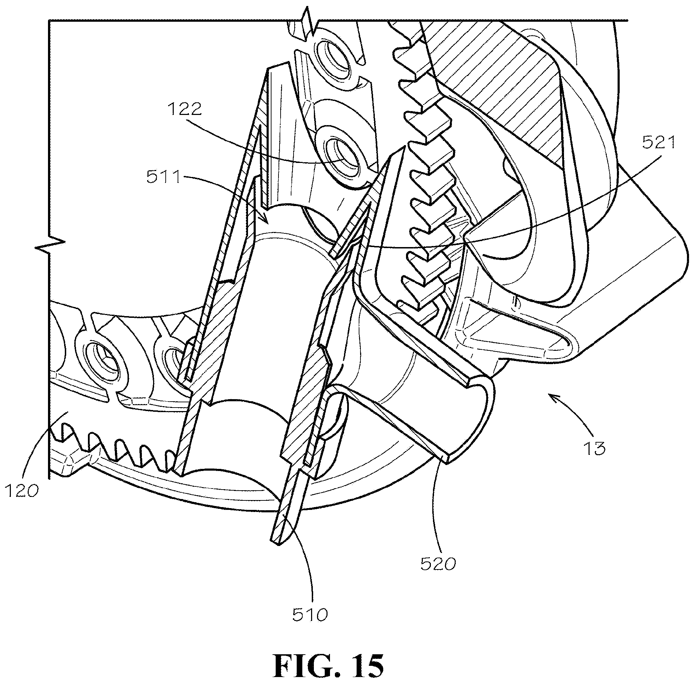

FIGs. 14 and 15 illustrate a seed acceleration system 500 for accelerating seed from seed meter 13 to seed orientation coil assembly 40 in accordance with the present invention. Conduit 510 having a first end 511 and second end 512 is disposed with first end adjacent to a seed release from a seed aperture 122 on seed disc 120 in seed meter 13. Gas supply line 520 supplies gas to nozzle 521, which is in fluid communication with conduit 510. In FIG. 15, conduit 510, gas supply line 520, and nozzle 521 are shown in sectioned view. The gas can be any gas and includes, but is not limited to, air or nitrogen.

Proximate to second end 512, a vent 515 is provided to vent the gas before the gas enters the seed orientation coil assembly. By venting conduit 510, seed orientation coil assembly 40 does not need vents 68. Seed orientation coil assembly 40 can have an enclosed outer surface. Vent 515 can vent all gas, a partial amount of gas, or a majority of gas from conduit 510. There can be one vent 515 or a plurality of vents 515.

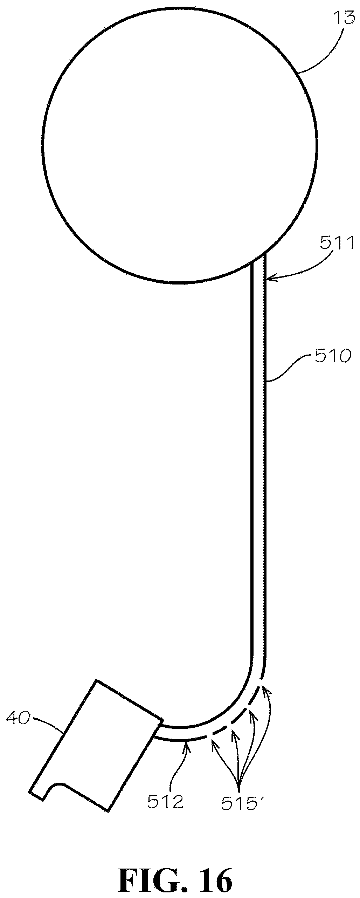

In another embodiment according to the present invention illustrated in FIG. 16, second end 512 is curved before entry into the seed orientation coil assembly 40. There can be one or a plurality of vents 515' in the curved portion of second end 512. Vents 515' can be disposed through the outer radius of the curve.

An example of a seed meter 13 is described in PCT Publication Nos. WO2012/129442, WO016/077651, and WO2007/024646.

Other pneumatic seed accelerators are described in U.S. Patent Publication Nos. US20150122162A1, US20170105334A1, US20200359551A1, US20200359552A1, US20210051844A1, and US20210153423A1, U.S. Patent Nos. US8336471B2, US9043950B2, US9137941B2, US9521804B2, US10448561B2, US10743460B2, US10945363B2, US10959368B2, US10993366B2, and US10999966B2, and PCT Publication Nos. WO2019108881A1, WO2019197963A1, WO2021069599A1, and WO021069607A1 The outlets of the pneumatic conduits can be connected to the seed orientation coil assembly 40 via air infeed 42 to deliver seed into the seed orientation coil assembly 40.

The terminology used herein is for the purpose of describing particular embodiments only and is not intended to be limiting of the invention. As used herein, the term "and/or" includes any and all combinations of one or more of the associated listed items. As used herein, the singular forms "a,", "an," and "the" are intended to include the plural forms as well as the singular forms, unless the context clearly indicates otherwise. It will be further understood that the terms "comprises" and/or "comprising," when used in this specification, specify the presence of stated features, steps, operations, elements, and/or components, but do not preclude the presence of addition of one or more other features, steps, operations, elements, components, and/or groups thereof. The foregoing description is presented to enable one of ordinary skill in the art to make and use the invention and is provided in the context of a patent application and its requirements. Various modifications to the preferred embodiments of the apparatus, and the general principles and features of the system and methods described herein will be readily apparent to those of skill in the art. Thus, the present invention is not to be limited to the embodiments of the apparatus, system and methods described above and illustrated in the drawing figures, but is to be accorded the widest scope consistent with the scope of the appended claims.

## Claims

1. A seeding system comprising:
a seed meter (13) **;**
a conduit (510) for receiving seeds released from the seed meter (13) at a first end (511) of the conduit (510), and the conduit (510) having a second end (512) opposite the first end (511);
a gas source (520) connected to the conduit (510) proximate the first end (511) for accelerating seed in the gas; and
a vent (515, 515') in the conduit (510) proximate to the second end (512) to vent the gas,
**characterised in that**
the seeding system further comprises a seed orientation coil assembly (40) connected to the second end (512) to receive the accelerated seed.

2. The seeding system of claim 1, wherein there are a plurality of vents (515') and the conduit (510) at the second end (512) is curved.

3. The seeding system of claim 2, wherein the plurality of vents (515') are on an outer radius of the curve.

4. The seeding system of any of claims 1 to 3, wherein the vent (515, 515') releases all gas.

5. The seeding system of any of claims 1 to 3, wherein the vent (515, 515') releases a majority of the gas.

## Patentansprüche

1. Aussaatsystem, das Folgendes umfasst:
ein Saatgutdosiergerät (13);
eine Leitung (510) zum Empfangen von aus dem Saatgutdosiergerät (13) ausgegebenem Saatgut an einem ersten Ende (511) der Leitung (510), und wobei die Leitung (510) ein zweites Ende (512) gegenüber dem ersten Ende (511) aufweist;
eine Gasquelle (520), die mit der Leitung (510) in der Nähe des ersten Endes (511) zum Beschleunigen von Saatgut in dem Gas verbunden ist;
und
eine Ablassöffnung (515, 515') in der Leitung (510) in der Nähe des zweiten Endes (512) zum Ablassen des Gases, **dadurch gekennzeichnet, dass** das Aussaatsystem ferner eine Samenausrichtungsspulenanordnung (40) umfasst, die mit dem zweiten Ende (512) zum Empfangen des beschleunigten Saatguts verbunden ist.

2. Aussaatsystem nach Anspruch 1, wobei es mehrere Ablassöffnungen (515') gibt und die Leitung (510) an dem zweiten Ende (512) gekrümmt ist.

3. Aussaatsystem nach Anspruch 2, wobei sich die mehreren Ablassöffnungen (515') auf einem äußeren Radius der Krümmung befinden.

4. Aussaatsystem nach einem der Ansprüche 1 bis 3, wobei die Ablassöffnung (515, 515') das gesamte Gas ausgibt.

5. Aussaatsystem nach einem der Ansprüche 1 bis 3, wobei die Ablassöffnung (515, 515') einen Großteil des Gases ausgibt.

## Revendications

1. Système d'ensemencement, comprenant :
un doseur de semence (13) ;
un conduit (510) destiné à recevoir des semences libérées en provenance du doseur de semence (13) à une première extrémité (511) du conduit (510), et le conduit (510) ayant une seconde extrémité (512) opposée à la première extrémité (511) ;
une source de gaz (520), raccordée au conduit (510), à proximité de la première extrémité (511), destinée à faire accélérer la semence dans le gaz ;
et
un évent (515, 515') dans le conduit (510) à proximité de la seconde extrémité (512) pour éliminer le gaz, **caractérisé en ce que** le système d'ensemencement comprend en outre un ensemble spirale d'orientation de semence (40) raccordé à la seconde extrémité (512) pour recevoir la semence accélérée.

2. Système d'ensemencement de la revendication 1, dans lequel il y a une pluralité d'évents (515') et le conduit (510) à la seconde extrémité (512) est courbé.

3. Système d'ensemencement de la revendication 2, dans lequel la pluralité d'évents (515') sont sur un rayon extérieur de la courbe.

4. Système d'ensemencement de quelconques des revendications 1 à 3, dans lequel l'évent (515, 515') libère tout le gaz.

5. Système d'ensemencement de quelconques des revendications 1 à 3, dans lequel l'évent (515, 515') libère une majorité du gaz.
